# EUROPEAN PATENT SPECIFICATION

(11) **EP 2 708 778 B1**
(45) Date of publication and mention of the grant of the patent: **24.06.2015**
(21) Application number: 12197755.7
(22) Date of filing: 18.12.2012
(51) Int. Cl.: F16H 61/688, F16H 61/04

(54) **A shift control method for a vehicle with DCT**
Schaltsteuerverfahren für ein Fahrzeug mit Doppelkupplungsgetriebe (DCT)
Procédé de commande de changement de vitesse pour un véhicule avec DCT

(30) Priority: 12.09.2012 KR 20120101019
(43) Date of publication of application: 19.03.2014
(73) Proprietor: HYUNDAI MOTOR COMPANY, Seoul 137-938 (KR); KIA Motors Corporation, Seoul 137-938 (KR)
(72) Inventor: Kim, Joung Chul, 442-150 Gyeonggi-do (KR); Yoon, Young Min, 142-070 Seoul (KR)
(74) Representative: Viering, Jentschura & Partner Patent- und Rechtsanwälte

(56) References cited:
- EP-A2- 1 450 075
- US-A1- 2008 096 721

## Description

### BACKGROUND OF INVENTION

### Field of Invention

The present disclosure relates to a shift control method for a vehicle with DCT, and more particularly, to a shift control method when it is shifted to a high rank state during a take up control for a vehicle with DCT.

### Description of Related Art

Generally, a take up-control for a vehicle with DCT refers to as a control in which a target rotation number of an engine is set and kept in accordance to a current driving state, and the engine and an input shaft are to be synchronized fully by accelerating the input shaft of a transmission wherein at this time the control of a first clutch and a second clutch of DCT performs a total torques control for regulating a total of clutch control torque that is acted on the first clutch and the second clutch.

According to a related art, in a state of a current shifting gear being on i stage, when a high rank shift order to i+1 stage is made, a handover control through which the first clutch and the second clutch are engaged and disengaged each other to change their roles while keeping only the total torque of the first clutch and the second clutch is performed to respond to the high rank shift order.

That is, when the high rank shift order is not made during a prior take up control process, the input shaft of a transmission is accelerated by the take up control for an engine and the input shaft to be almost synchronized to satisfy a condition of within a slip rotation number in a predetermined range in a clutch (hereinafter, referred to as "first condition"), and the take up control is ended on a condition that the keeping of the slip in the above state is lasted for a predetermined time period (hereinafter, referred to as "second condition"). Accordingly, even when a high rank shift order is made during a take up control process, the first and second conditions have to be satisfied to end the take up control and then perform a common shift control. However, there are many cases not to satisfy specially the second condition and in these cases a take up control is responded through which a shift is performed by only a handover control while keeping the total torque, without ending the take up control as described-above.

Meanwhile, when the high rank shift order is made as described-above, a common shift control is performed in such a manner that the clutches are handover-controlled while reducing the engine rotation number based on an input shaft of a transmission and synchronizing the engine and the input shaft.

As described-above, when the high rank shift order is made during a take up control process in the prior art, the take up control through which the first and second clutches are handover-controlled while keeping only the total torque replaces a function of the shift control, instead of a common shift control, thereby deteriorating a shift replying property and a shifting feeling. Specially, when a high rank shift order to i+1 stage is made during a take up control to i stage and a high rank shift order to i+2 stage is made while a take up control is responded, the take up control is not ended continuously to cause excessive slip on the clutch and thus there may occur a circumstance where normal shift feeling and driving performance are difficult to be ensured.

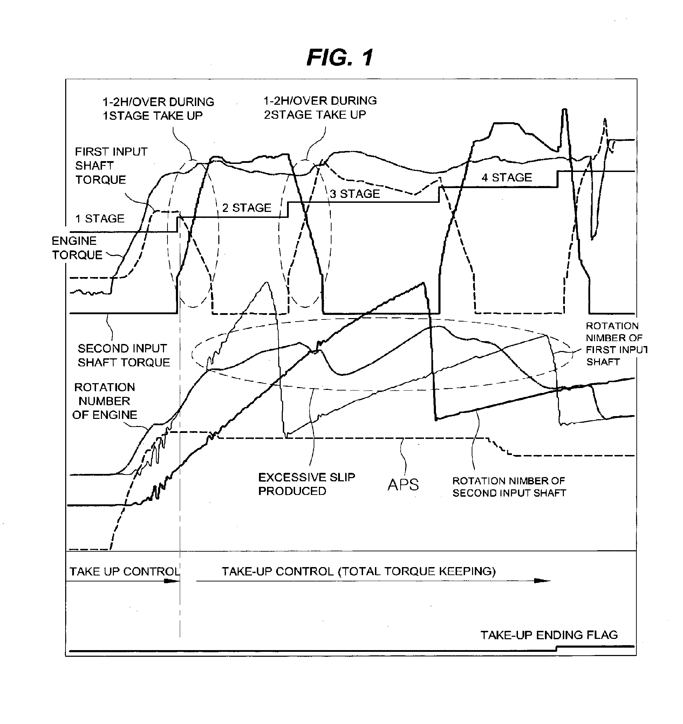

FIG. 1 is a graph illustrating a circumstance where a high rank shift order is made during a prior take up control process wherein a take up control is responded to a shift while a handover of 1-2 stage between a first stage and a second stage is made during a take up control of the first stage, and a handover of 2-3 stage between a second stage and a third stage is made during a take up control of the second stage. As shown in FIG. 1 in this case, it is shown in a lower side of the drawing that the rotation numbers of the first input shaft and second input shaft are not to be synchronized with the rotation number of an engine to cause considerable slip that is provided at the first and second clutches connecting the first and second input shafts and an engine, respectively. The excessive slip as described-above causes to deteriorate a shift replying property and a shift feeling, and decrease durability of the first and second clutches. Document US 2008 / 0096721 A1 shows an automatic transmission control apparatus that focuses on the rotational speed differences of the frictional engaging elements and the distribution of torque transferred by the frictional engaging elements.

### SUMMARY OF INVENTION

Various aspects of the present invention provide for a shift control method for a vehicle with DCT, through which riding feeling of a vehicle is improved by minimizing a shift replying property and a shift feeling and further durability of a first and second clutches of DCT is improved even when a high rank shift order is made during a take up control for a vehicle with DCT.

The present invention relates to a shift control method for a vehicle with DCT according to claim 1.

Further embodiments are described in the dependent claims.

It is understood that the term "vehicle" or "vehicular" or other similar term as used herein is inclusive of motor vehicles in general such as passenger automobiles including sports utility vehicles (SUV), buses, trucks, various commercial vehicles, watercraft including a variety of boats and ships, aircraft, and the like, and includes hybrid vehicles, electric vehicles, plug-in hybrid electric vehicles, hydrogen-powered vehicles and other alternative fuel vehicles (e.g. fuels derived from resources other than petroleum). As referred to herein, a hybrid vehicle is a vehicle that has two or more sources of power, for example both gasoline-powered and electric-powered vehicles.

The methods of the present invention have other features and advantages which will be apparent from or are set forth in more detail in the accompanying drawings, which are incorporated herein, and the following Detailed Description, which together serve to explain certain principles of the present invention.

### BRIEF DESCRIPTION OF THE DRAWINGS

FIG. 1 is a graph illustrating a circumstance where a high rank shift order is made during a prior take up control process;
FIG. 2 is a flowchart illustrating an exemplary shift control method for a vehicle with DCT according to the present invention; and
FIG. 3 is a graph illustrating an exemplary circumstance where a high rank shift order is made during a take up control process when the control method as shown in FIG. 2 is applied.

It should be understood that the appended drawings are not necessarily to scale, presenting a somewhat simplified representation of various features illustrative of the basic principles of the invention. The specific design features of the present invention as disclosed herein, including, for example, specific dimensions, orientations, locations, and shapes will be determined in part by the particular intended application and use environment.

In the figures, reference numbers refer to the same or equivalent parts of the present invention throughout the several figures of the drawing.

### DETAILED DESCRIPTION

Reference will now be made in detail to various embodiments of the present invention examples of which are illustrated in the accompanying drawings and described below. While the invention will be described in conjunction with exemplary embodiments, it will be understood that present description is not intended to limit the invention to those exemplary embodiments. On the contrary, the invention is intended to cover not only the exemplary embodiments, but also various alternatives, modifications, equivalents and other embodiments, which may be included within the scope of the invention as defined by the appended claims. /

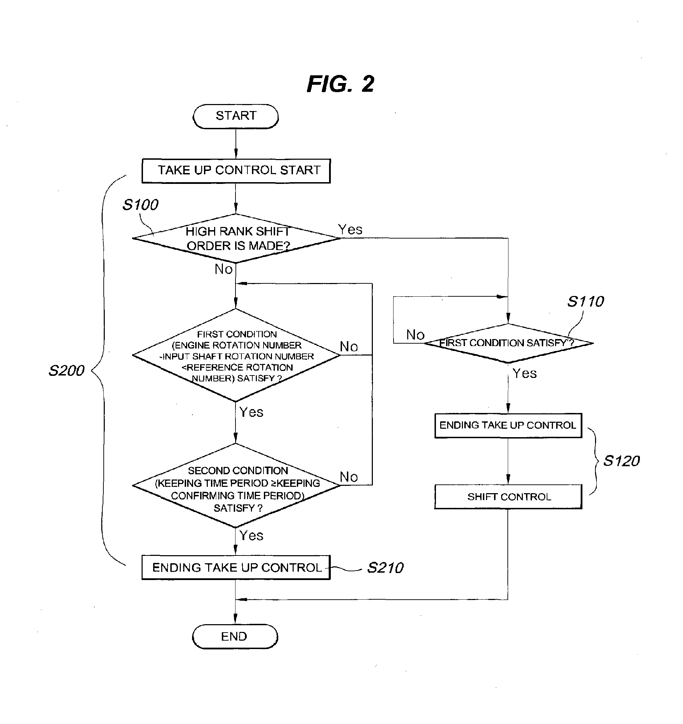

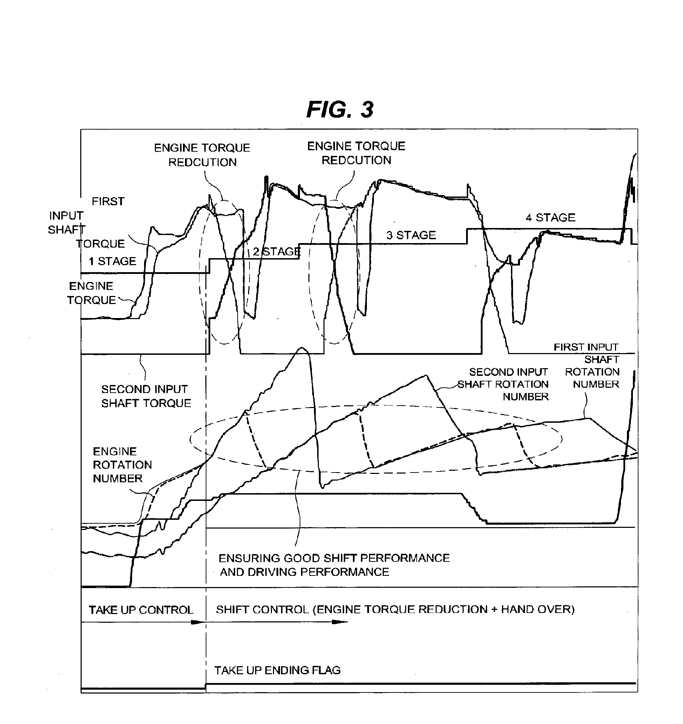

Referring to FIGS. 2 and 3, a shift control method for a vehicle with DCT according to the present invention includes: a shift order confirming step S100 for confirming whether a high rank shift order is made during a take up control of a vehicle with DCT; a slip determining step S110 for determining whether the difference between rotation number of an input shaft to be synchronized with an engine and the rotation number of the engine is within a predetermined reference rotation number when the high rank shift order has been made as a result of the shift order confirming step S100; and a control converting step S120 for ending the take up control and converting it into a shift control when the difference between rotation number of an input shaft and the rotation number of the engine has been within a predetermined reference rotation number as a result of the slip determining step S110.

As a result of the shift order confirming step S100, when the high rank shift order is not made, the slip determining step S110 is performed, the keeping confirming step for monitoring whether the state that the difference between the rotation number of an input shaft and the rotation number of the engine has been within a predetermined reference rotation number is kept for a predetermined keeping confirming time period is performed, and then a take up ending step for ending the take up control is performed.

That is, when the take up control is performed to a vehicle with DCT, the first condition that whether the difference between the rotation number of an input shaft and the rotation number of the engine is within a predetermined reference rotation number is determined, and the second condition that whether the state of the first condition is kept for the keeping confirming time period is determined, and when two conditions are all satisfied, the take up control is ended. When a high rank shift order for high rank shifting from current i stage to i+1 stage is made during the take up control, according to a prior art, the take up control is ended only when the first and second conditions are all satisfied even in this case. However, in the present invention, the take up control is converted into the shift control only when the first condition is satisfied without confirming whether the second condition is satisfied. Accordingly, the shift control is responded promptly during the take up control thereby avoiding an excessive slip of the corresponding clutch by the rotation speed difference between the engine and the input shaft thereby ensuring prompt replying property and improving shift feeling to improve riding feeling of a vehicle.

Of course, when the take up control is converted into the shift control in the control converting step, the clutches are handover-controlled while reducing engine torque in the shift control.

The present invention as described-above will be described in detail as follows. That is, a shift control method according to the present invention includes: a take up control step S200 for controlling an engine and an input shaft to be synchronized fully by accelerating an input shaft of a transmission while setting and keeping a target rotation number of an engine in accordance to a current driving state of a vehicle; a take up control ending step S210 for ending the take up control when the difference between rotation number of an input shaft to be synchronized with an engine and the rotation number of the engine is within a predetermined reference rotation number and the state is kept for a predetermined keeping confirming time period during the take up control step S200; a slip determining step S110 for determining whether the difference between rotation number of an input shaft to be synchronized with an engine and the rotation number of the engine is within a predetermined reference rotation number when the high rank shift order has been made during the take up control step S200; a control converting step S120 for ending the take up control and converting it into the shift control when the difference between rotation number of the input shaft the rotation number of the engine is within a predetermined reference rotation number as the result of the slip determining step S110.

Of course, when the take up control is converted into the shift control in the control converting step S120, the clutches is handed-over to be shifted while reducing engine torque thereby ensuring a prompt shift replying property and a shift feeling through the prompt and proper converting into the shift control, and improving durability of the clutches by minimizing slip of the clutches.

Referring to FIG. 3, it is shown in an upper side of the drawing that the reduction of engine torque through the shift control that is responded to the high rank shift order during the take up control and it is shown in a lower side thereof that the space where the rotation numbers of the first and second input shafts are synchronized with the rotation number of an engine and kept in that state is ensured to perform a prompt shift thereby reducing greatly the slip of the clutches.

According to a shift control method for a vehicle with DCT of the present invention, riding feeling of a vehicle is improved by minimizing a shift replying property and a shift feeling and further durability of a first and second clutches of DCT is improved even when a high rank shift order is made during a take up control for a vehicle with DCT.

For convenience in explanation and accurate definition in the appended claims, the terms upper or lower, and etc. are used to describe features of the exemplary embodiments with reference to the positions of such features as displayed in the figures.

The foregoing descriptions of specific exemplary embodiments of the present invention have been presented for purposes of illustration and description. They are not intended to be exhaustive or to limit the invention to the precise forms disclosed, and obviously many modifications and variations are possible in light of the above teachings. The exemplary embodiments were chosen and described in order to explain certain principles of the invention and their practical application, to thereby enable others skilled in the art to make and utilize various exemplary embodiments of the present invention, as well as various alternatives and modifications thereof. It is intended that the scope of the invention be defined by the Claims appended hereto.

## Claims

1. A shift control method for a vehicle with DCT (Dual-Clutch Transmission), comprising:
a first step (S100) of confirming whether a high rank shift order is made during a take up control of the vehicle with DCT;
a second step (S110) of determining a slip by determining whether the difference between rotation number of an input shaft to be synchronized with an engine and the rotation number of the engine is within a predetermined reference rotation number when the high rank shift order has been made as a result of the first step (S100); and
a third step (S120) for ending the take-up control and converting the take-up control into a shift control when the difference between rotation number of the input shaft and the rotation number of the engine has been within the predetermined reference rotation number as a result of the second step (S110).

2. The shift control method for a vehicle with DCT of claim 1, wherein when the high rank shift order is not made as a result of the first step (S100), the second step (S110) is performed, a step for monitoring whether the state, in which the difference between the rotation number of an input shaft and the rotation number of the engine has been within the predetermined reference rotation number, is kept for a predetermined keeping confirming time period is performed, and then a step (S210) for ending the take-up control is performed.

3. The shift control method for a vehicle with DCT of claim 1, wherein when the take-up control is converted into the shift control in the third step (S120), the clutches are handover-controlled while reducing engine torque in the shift control.

## Patentansprüche

1. Ein Schaltsteuerungsverfahren für ein Fahrzeug mit Doppelkupplungsgetriebe, aufweisend:
einen ersten Schritt (S100) zum Feststellen, ob eine Hochschalt-Anweisung gemacht wird während einer Hochfahr-Steuerung des Fahrzeugs mit Doppelkupplungsgetriebe;
einen zweiten Schritt (S110) zum Ermitteln eines Schlupfes, indem ermittelt wird, ob die Differenz zwischen einer Drehzahl einer mit einem Verbrennungsmotor zu synchronisierenden Eingangswelle und der Drehzahl des Verbrennungsmotors innerhalb einer vorbestimmten Referenzdrehzahl ist, wenn als Folge des ersten Schrittes (S100) die Hochschalt-Anweisung gemacht wurde, und
einen dritten Schritt (S120) zum Beenden der Hochfahr-Steuerung und zum Umwandeln der Hochfahr-Steuerung in eine Schaltsteuerung, wenn als Folge des zweiten Schrittes (S110) die Differenz zwischen der Drehzahl der Eingangswelle und der Drehzahl des Verbrennungsmotors innerhalb der vorbestimmten Referenzdrehzahl ist.

2. Das Schaltsteuerungsverfahren für ein Fahrzeug mit Doppelkupplungsgetriebe nach Anspruch 1, wobei, wenn als Folge des ersten Schrittes (S100) die Hochschalt-Anweisung nicht gemacht wurde, der zweite Schritt (S110) durchgeführt wird, ein Schritt zum Überwachen, ob der Zustand, in welchem die Differenz zwischen der Drehzahl der Eingangswelle und der Drehzahl des Verbrennungsmotors innerhalb der vorbestimmten Referenzdrehzahl ist, für eine vorbestimmte Aufrechterhaltungs-Bestätigungs-Zeitperiode aufrechterhalten wird, durchgeführt wird, und anschließend ein Schritt (S210) zum Beenden der Hochfahr-Steuerung durchgeführt wird.

3. Das Schaltsteuerungsverfahren für ein Fahrzeug mit Doppelkupplungsgetriebe nach Anspruch 1, wobei, wenn im dritten Schritt (S120) die Hochfahr-Steuerung in die Schaltsteuerung umgewandelt wird, die Kupplungen übergabe-gesteuert werden, wobei das Verbrennungsmotordrehmoment in der Schaltsteuerung verringert wird.

## Revendications

1. Procédé de commande de changement de vitesses destiné à un véhicule doté d'une DCT (boîte de vitesses à double embrayage), comprenant :
une première étape (S 100) consistant à confirmer si un ordre de changement de vitesse pour une vitesse supérieure est donné au cours d'une commande de montée du véhicule doté d'une DCT ;
une deuxième étape (S 110) consistant à déterminer un patinage en déterminant si la différence entre la vitesse de rotation d'un arbre d'entrée à synchroniser avec un moteur, et la vitesse de rotation du moteur, se situe dans les limites d'une vitesse de rotation de référence prédéterminée lorsque l'ordre de changement de vitesse pour une vitesse supérieure a été donné en raison de la première étape (S 100) ; et
une troisième étape (S 120) consistant à mettre fin à la commande de montée et à convertir la commande de montée en une commande de changement de vitesse lorsque la différence entre la vitesse de rotation de l'arbre d'entrée et la vitesse de rotation du moteur se situe dans les limites d'une vitesse de rotation de référence prédéterminée en raison de la deuxième étape (S110).

2. Procédé de commande de changement de vitesse destiné à un véhicule doté d'une DCT selon la revendication 1, dans lequel, lorsque l'ordre de changement de vitesse pour une vitesse supérieure n'est pas donné en raison de la première étape (S 100), la deuxième étape (S 110) est exécutée, une étape consistant à surveiller si l'état, dans lequel la différence entre la vitesse de rotation d'un arbre d'entrée et la vitesse de rotation du moteur se situe dans les limites d'une vitesse de rotation de référence prédéterminée, est maintenu pendant une période de temps de confirmation de maintien prédéterminée, et ensuite une étape (S210) consistant à mettre fin à la commande de montée est exécutée.

3. Procédé de commande de changement de vitesses destiné à un véhicule doté d'une DCT selon la revendication 1, dans lequel, lorsque la commande de montée est convertie en une commande de changement de vitesse dans la troisième étape (S120), les embrayages sont commandés par transfert tout en réduisant le couple moteur dans la commande de changement de vitesse.
